Europäisches Patentamt

European Patent Office

Office européen des brevets

(19)

(11) Publication number: **0 044 286**
A2

(12) # EUROPEAN PATENT APPLICATION

(21) Application number: **81850109.0**

(22) Date of filing: **11.06.81**

(51) Int. Cl.³: **C 09 J 5/00**
C 08 J 9/36, C 09 J 3/00
B 32 B 27/00

(30) Priority: **04.07.80 SE 8004983**

(43) Date of publication of application:
**20.01.82 Bulletin 82/3**

(84) Designated Contracting States:
**AT BE CH DE FR GB IT LI LU NL**

(71) Applicant: **KemaNord AB**
**Box 11020**
**S-100 61 Stockholm(SE)**

(72) Inventor: **Jägerskog, Kjell**
**Apelvägen 3**
**S-681 00 Kristinehamn(SE)**

(74) Representative: **Schöld, Zaid**
**c/o KemaNobel AB, Patents Box 11065**
**S-100 61 Stockholm(SE)**

(54) **A method of securing adhesion.**

(57) The invention relates to a method of securing adhesion between rigid cellular plastic and other materials, preferably materials having a curved surface. The method is characterized in that a putty composition is applied, preferably by spraying, to the cellular plastic and/or the other material, which putty composition comprises a curable resin in which microscopic particles are dispersed. The invention also relates to a means for carrying out the metod.

EP 0 044 286 A2

## A METHOD OF SECURING ADHESION

The present invention relates to a method of securing adhesion between rigid cellular plastics and other surfaces. More particularly the invention relates to a method of securing adhesion between rigid cellular plastics and other materials using a putty composition comprising a curable resin in which microscopic particles are dispersed. The invention has hitherto been found to be of particular importance in the building of boats.

Boat hulls and decks are generally manufactured in a mould. In this mould a so-called gelcoat is applied. (Gelcoat is an internationally accepted term for the exterior plastic layer of a boat hull or boat deck, which layer is unreinforced and often pigmented). Several layers of a usually reinforced plastic are then applied on the gelcoat. This plastic is often a polyester and the reinforcing material is often made of glass fibre. When a suitable number of layers of reinforced binder have been applied, a so-called topcoat is then applied. (A topcoat is a gelcoat containing certain additives, such as paraffin). The number of layers of the reinforced plastic is generally set with respect to the strength requirements for the final product. A disadvantage of this method is that the final product will be heavy and that the heat- and sound insulation will be poor. To make up for these deficiencies so-called spacer material can be introduced between two polyester layers, and preferably rigid cellular plastics, e.g. Divinycell ®, are used as such materials. This measure gives an improved heat- and sound insulation and the stiffness is increased without increase of the weight of the material.

Prior to the present invention there have been considerable difficulties in obtaining a reliable, easily established, adhesion between the reinforced plastic and the spacer material at serial production. It has therefore been necessary to limit the use of spacer material to those parts which will not be subjected to too great loads, or to use other production techniques which seriously raise the production costs.

It has now surprisingly been found that a reliable and durable adhesion between rigid cellular plastic and other materials can be achieved if a putty composition is used, which composition has a low density and a high viscosity and which comprises a curable resin in which microscopic particles are dispersed.

The cellular plastic can be rigid foam with open and/or closed cells and the cellular plastic can be based on PVC, such as Divinycell $^{®}$, or on polyurethane. Other foams such as phenolic and acrylic foams can also be used.

The material, which by means of the described putty composition, is made to adhere to the cellular plastic can be any material which has a good adhesion to the putty composition. Examples of such materials are metal sheets, plywood and other sheet materials, for example from plastics. Glass fibre reinforced plastic, where the plastic is a curable resin, preferably a polyester, should be particularly mentioned. The glass fibre reinforced plastic can advantageously comprise a curable resin of the same type as the curable resin in the putty composition. However, other curable resins, e.g. such based on epoxy, can also be used.

The curable resin in the putty composition is preferably polyester, but it is also possible to use other curable resins such as epoxy resins. It is particularly suitable to use the different qualities of styrene modified polyester which are commercially available.

To secure the adhesion it is, according to the invention, necessary that the microscopic particles are well dispersed in the curable resin. The size of the particles can vary within wide limites, but advantageously they should not be greater than 1000 μm. A suitable lower limit is 10 μm, and it is particularly preferred that the particle size is within the range of 10 to 100 μm. It is important that the putty composition of curable resin and microscopic particles has a suitable, not too high density. As it at industrial production of e.g. boats, in practice, often is necessary to use certain types of thermosetting resins, the amount and density of the microscopic particles in the putty composition will be the essential factors by which the density of the putty composition can be influenced. If the density of the putty composition is too high, the composition will not remain on sloping, more or less vertical, surfaces long enough that there will be time to apply the rigid cellular plastic and that there will be time for the putty composition to harden before it flows off. The thixotropy of the putty composition is also of importance in this connection, and it is adjusted with thixotropic agents. It can be suitable to have the density of the putty composition vary between 0.30 and 1.00, preferably between 0.50 and 0.75 $kg/dm^3$, and when conventional polyesters are used this can be achieved by using microscopic particles having densities between 0.01 and 0.7, preferably between 0.01 and 0.25 $kg/dm^3$. The microscopic particles do not only regulate the density of the putty composition but they also regulate its viscosity in such a manner that a larger amount of microscopic particles gives a lower density and a higher viscosity.

The microscopic particles can either be of organic or inorganic material. Organic particles are preferably expanded so-called microspheres, having a shell which can be made up from co-polymers of vinyl chloride or vinylidene chloride and acrylonitrile and copolymers of styrene and acrylonitrile. The following should also be mentioned: copolymers of methacrylate containing up to about 20 per cent by weight of styrene, copolymers of methyl methacrylate and up to about 50 per cent by weight of combined monomers of ethyl methacrylate, copolymers of methyl methacrylate and up to about 70 per cent of orthochlorostyrene. Microscopic particle of phenolic resins and epoxy resins can also be used. The microscopic particles can also be (hollow) particles of an inorganic material, e.g. of glass, sodium silicate, aluminium silicate, provided that the material is light enough.

The content of microscopic particles in the putty composition is decided with respect to the desired density and viscosity of the prepared putty composition. When microscopic particles of an extremely light material e.g. of Expancel ®, is used, the content of microscopic particles can

**0044286**

thus be from 2 to 10 per cent, preferably from 2 to 5 per cent, based on the weight of the curable resin. When somewhat heavier microscopic particles are used, the content can be from 5 to 20 per cent, preferably from 7 to 12 per cent, based on the weight of the curable resin. With respect to volume the microscopic particles can make up from 25 to 75, preferably from 40 to 60 per cent of the putty composition.

The putty composition used according to the invention also contains initiators for the curable resin, and the type and amount of initiator is selected with respect to the type of curable resin. For unsaturated polyesters of the type which often is used in boat hulls and boat decks it can be suitable to use 1 to 50 per cent by weight of those initiators (e.g. peroxide) which are commersially available for polyester systems.

Besides thixotropic agents the putty composition can also contain other additives such as accelerators, coupling agents, fillers, fire retardant agents and/or pigments. As examples of thixotropic agents can be mentioned silicon based agents such as Aerosil [R] and Cabosil [R] and hydrated ricin oils.

A putty composition according to the invention can e.g. have the following composition (based on the curable resin):

| Component | Parts |
|---|---|
| liquid curable resin [x)] | 100 |
| microscopic particles | 1-20 |
| initiator | 1-5 |
| thixotropic agent | 0-100 |
| other additives | <5 |

Particularly, the putty composition can be made up as follows:

| Component | Parts |
|---|---|
| liquid curable resin [x)] | 100 |
| microscopic particles | 2-12 |
| initiator | 1-3 |
| thixotropic agent | 0-50 |
| other additives | <3 |

[x)]Foot-note. Preferably of a commercially available quality.

At application the curable resin is dissolved in a suitable solvent, such as styrene, and is thus liquid. The solvent is built into the curable resin at hardening.

Special advantages are gained when the method of the invention is used for rigid cellular plastic which are entirely or partly cut or bored through (in this connection "bored through" should be taken as meaning that optional through holes, in one way or the other, thus not necessarily by boring, have been made in the cellular plastic). Such cellular plastics are advantageously used when it is desired to use rigid cellular plastics in combination with curved surfaces, e.g. boat hulls. The notches in the cellular plastics make the plastic flexible and it can thus be adjusted to the curved surface. If the rigid cellular plastic has grooves which go through entirely, such as in sheets of Divinycell ®, the cellular plastic can be kept together by a thin layer or a thin web of a flexible material.

Prior to the present invention it has not been possible to establish, rapidly and easily, whether there is adhesion between the rigid cellular plastic and the reinforced curable resin. When a highly viscous putty composition of low density, of the kind described above, is used in combination with a rigid cellular foam which has been cut or bored through, the putty composition will penetrate into and fill up the cavities, i.e. the holes or grooves, in the cellular plastic, and it is possible to visually observe if there has been a satisfactory adhesion. As the putty composition of the invention is capable of penetrating into the cavities not only the very important advantage of visual inspection of the adhesion is achieved, but there is also a marked improvement in the shearing strength.

In the preferred embodiment of the invention which concerns the production of boat hulls and boat decks, a gelcoat is applied in a mould of the desired configuration. A layer of reinforced curable resin, such as polyester, is then applied on the gelcoat, and the polyester is optionally allowed to harden. A putty composition of the previously described kind is then applied. The application can advantageously be carried out by spraying the composition which can be dissolved in a suitable amount of solvent, e.g. in styrene. Other application methods can also be used, the composition can e.g. be poured onto the cellular plastic. Rigid cellular plastic which has been entirely or partly cut or bored through, e.g. Divinycell®, is then applied. Before the final topcoat is optionally applied, another layer of reinforced curable plastic is applied.

Besides the above mentioned advantages in the possibility of visual inspection of the adhesions and the improved shearing strength, conciderable reduction of the production time is also gained by the method of the invention and the production can be carried out essentially without interruptions as it is possible to use a sprayable putty composition.

Although the invention has been described mainly with reference to the production of boats, and particularly boat hulls and boat decks, there is no reason to limit the invention to this, but the method of the invention can be used whenever it is desired to join a rigid cellular plastic and another material, preferably one with a curved surface.

The invention is illustrated in the following example which, however, is not intended to limit the same.

A liquid putty composition was prepared from the following components:

| Component | Parts |
|---|---|
| polyester of conventional type containing about 40 % styrene | 50 |
| microscopic particles (Expancel®) | 2.5 |
| CP 46 E (thixotropic agent) | 50 |
| initiator | 2 |

The obtained putty composition was sprayed onto a glassfibre reinforced layer. A chequered mat of Divinycell® was pressed into the putty composition. It was possible to establish visually that the putty composition had penetrated the cavities and that a good adhesion had been obtained.

## Claims

1. A method of securing adhesion between rigid cellular plastic and other materials, preferably such having a curved surface, whereby a putty composition is applied to the cellular plastic and/or the other material, the putty composition comprising a curable resin in which microscopic particles are dispersed.

2. A method according to claim 1, characterized in that the rigid cellular plastic has been partly or entirely cut or bored through in such a manner that there are grooves or holes in the cellular plastic, which grooves or holes will be substantially filled by putty composition when this is applied.

3. A method according to claim 1 or 2, characterized in that the putty composition is applied by spraying.

4. A method according to any of claims 1 to 3, characterized in that the rigid cellular plastic has open and/or closed cells and that the cellular plastic is a PVC or polyurethane based foam.

5. A method according to any of claims 1 to 4, characterized in that the material is a glass fibre reinforced curable plastic, preferably a polyester.

6. A means for securing adhesion between rigid cellular plastic and other materials, preferably such having a curved surface, characterized in that said means is a putty composition having a low density and high viscosity and comprising a curable resin and an initiator for the resin in which resin microscopic particles are dispersed.

7. A means according to claim 6, characterized in that the composition further comprises thixotropic agents, accelerators fire-retardant agents, coupling agents, fillers and/or pigments.

8. A means according to claim 6 or 7, characterized in that the curable resin is an unsaturated, preferably styrene modified, polyester.

9. A means according to any of claims 6 to 8, characterized in that the microscopic particles are expanded microspheres having a shell of thermoplastic material.

10. A means according to any of claims 6 to 9, characterized in that the shell is made up from a copolymer of acrylonitrile and vinylidene chloride.